# EUROPÄISCHE PATENTSCHRIFT

(11) **EP 1 762 430 B1**
(45) Veröffentlichungstag und Bekanntmachung des Hinweises auf die Patenterteilung: **10.03.2010**
(21) Anmeldenummer: 05108233.7
(22) Anmeldetag: 08.09.2005
(51) Int. Cl.: B60Q 1/068

(54) **Kraftfahrzeugscheinwerfer**
Headlamp for a vehicle
Projecteur pour un vehicule

(43) Veröffentlichungstag der Anmeldung: 14.03.2007
(73) Patentinhaber: Hella KGaA Hueck & Co., 59552 Lippstadt (DE)
(72) Erfinder: Derckum, Jörg, 59590 Geseke (DE); Seiger, Ralf, 59556 Lippstadt (DE)

(56) Entgegenhaltungen:
- EP-A- 0 267 814
- EP-A- 0 275 095
- DE-A1- 10 129 968
- FR-A- 1 257 788
- FR-A- 2 234 761
- US-A1- 2003 117 812

## Beschreibung

Die Erfindung betrifft einen Kraftfahrzeugscheinwerfer mit einem Gehäuse, an dem ein horizontal und ein vertikal verschwenkbarer Tragrahmen angeordnet ist, der an einer Tragrahmenaufhängung mit mindestens drei Lagerpunkten gelagert ist und wenigstens ein lichterzeugendes Modul nimmt wobei die Lagerpunkte ein Fiktives Dreieck bilden und wobei das lichterzeugende Modul als ein Projektionsmodul mit einen Lichtelement, einem Reflektor und einer Blende ausgeführt ist.

Aus der DE 199 23 635 A1 ist ein Fahrzeugscheinwerfer beschrieben, der ein Gehäuse und einen Reflektor aufweist. Der Reflektor ist in dem Gehäuse um eine horizontale Schwenkachse und um eine vertikale Schwenkachse verschwenkbar gelagert. Zu diesem Zweck weist der Reflektor an seiner Rückseite einen ersten, manuell verstellbaren Lagerpunkt und einen zweiten, manuell verstellbaren Lagerpunkt auf, die auf einer parallelen Ebene in einem Abstand zur horizontalen Schwenkachse und in einem Abstand zueinander angeordnet sind. Ein dritter Lagerpunkt ist auf der horizontalen Schwenkachse angeordnet, wobei im Bereich der Lagerpunkte der Reflektor über Gelenkteile mit dem Gehäuse verbunden ist.

Es hat sich gezeigt, dass in jüngster Zeit bei Kraftfahrzeugscheinwerfer Mehrkammerreflektoren häufig zum Einsatz kommen, bei denen jede Kammer eine individuelle Lichtverteilung erzeugt, zum Beispiel ein Abblendlicht, Fernlicht usw. Ferner existieren Kraftfahrzeugscheinwerfersysteme, bei denen anstelle einer Reflektorkammer eine Tragrahmenfunktion integriert ist. Bei diesem verschwenkbaren Tragrahmen sind häufig lichterzeugende Module, wie beispielsweise Module mit Projektortechnik angeordnet. Diese Baugruppen werden in der Regel innerhalb einer Scheinwerferkonstruktion über einstellbare Tragrahmenaufhängungen gehalten, die unter anderem zur Justage der zu erzeugenden Lichtverteilung dienen. Nachteiligerweise hat sich gezeigt, dass mit einer zunehmenden Reflektorkammeranzahl in Kombination mit relativ schweren Projektormodulen die Tragrahmenaufhängungen häufig stark beansprucht werden. Hinzu kommt das Problem, dass während des Betriebes des Fahrzeugscheinwerfers, der in der Regel aus Kunststoff besteht, hohe Wärmeentwicklungen entstehen. Bei höheren Temperaturen verliert in der Regel der verwendete Kunststoff seine gewünschte Stabilität, wodurch die mechanische Belastbarkeit der Tragrahmenaufhängung stark verringert wird. Es können somit Resonanzen und/oder Schwingungen innerhalb des Kraftfahrzeugscheinwerfers entstehen, welches beispielsweise zu einem Lichtzittern führt. Das bedeutet, dass die Fahrbahnausleuchtung durch die anfallenden, mechanischen Beanspruchungen derart negativ beeinflusst werden kann, wodurch folglich Komforteinbußen des Fahrers entstehen. Unerlaubte Blendungen des Gegenverkehrs sind ebenfalls nicht ausgeschlossen. Aus US 2003/0117812 ist ein gattungsmäßiger Fahrzeugscheinwerfer bekannt. Weiterhin ist aus FR 2234761 ein für die Erfindung wichtiger Kraftfahrzeugscheinwerfer bekannt.

Es ist daher die Aufgabe der vorliegenden Erfindung, einen Kraftfahrzeugscheinwerfer bereitzustellen, der die genannten Nachteile vermeidet, insbesondere ein Fahrzeugscheinwerfer geschaffen wird, der einfach gestaltet ist und ohne erheblichen Aufwand montiert werden kann, wobei auch unter extremen Betriebsbedingungen während der Fahrt des Kraftfahrzeuges eine negative Beeinflussung der Fahrbahnausleuchtung weitestgehend vermieden wird.

Zur Lösung dieser Aufgabe wird ein Kraftfahrzeugscheinwerfer mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Lagerpunkte ein fiktives Dreieck bilden und der resultierende Masseschwerpunkt des Tragrahmens sowie des lichterzeugenden Moduls im Wesentlichen mittig innerhalb des Dreiecks liegt. Durch diesen erfindungsgemäßen Kraftfahrzeugscheinwerfer wird eine zentrale Anordnung des Masseschwerpunktes relativ zur Tragrahmenaufhängung erzielt. In der bevorzugten Ausführungsform der Erfindung weist die Tragrahmenaufhängung drei Lagerpunkte auf. Der Tragrahmen kann ein oder mehrere lichterzeugende Module aufweisen, die im Wesentlichen den größten Masseanteil ausmachen. Um eine günstige Austarierung des Masseschwerpunktes zu erzielen, ist es von Vorteil, die Lagerpunkte derart in ihrer Position zu wählen, dass der resultierende Masseschwerpunkt, der im Wesentlichen sich aus dem Masseschwerpunkt des Tragrahmens und der Masseschwerpunkte der einzelnen lichterzeugenden Module zusammen setzt, mittig innerhalb des Dreiecks positioniert ist.

Zur Klarstellung der Erfindung ist hier nicht gemeint, dass der resultierende Masseschwerpunkt unbedingt auf der sich bildenden fiktiven Fläche des fiktiven Dreiecks liegen muss. Bei der vorliegenden Erfindung kann es durchaus ausreichend sein, dass der Masseschwerpunkt auf der sich bildenden Projektionsfläche des fiktiven Dreiecks liegt. Unter der Projektionsfläche ist hier die Fläche gemeint, die sich für den Betrachter bildet, wenn er sich in Augenhöhe zum Scheinwerfer befindet. Durch die Positionierung des Masseschwerpunktes mittig innerhalb des fiktiven Dreiecks können etwaig entstehende Kippmomente, die beispielsweise während der Fahrzeugfahrt entstehen, wirkungsvoll reduziert werden. Besonders sinnvoll ist es hierbei, die schweren Baugruppen, wie beispielsweise das als Projektionsmodul ausgeführte lichterzeugende Modul, möglichst in unmittelbare Nähe des virtuellen Befestigungsdreiecks anzuordnen.

In einer bevorzugten Ausführungsalternative weist der Tragrahmen mindestens ein dem Projektionsmodul benachbartes Lichtmodul auf. Vorzugsweise liegt das Projektionsmodul zwischen zwei Lichtmodulen. Hierbei ist der Tragrahmen an beiden Seiten mit Kammerreflektoren ausgebildet. Diese Kammerreflektoren können beispielsweise mit einer Reflektorfläche ausgeführt sein. In einer möglichen Ausführungsform der Erfindung ist ein Lichtmodul als Fernlichtmodul und das weitere Lichtmodul als Abbiegelichtmodul ausgeführt, wobei das Projektionsmodul zwischen dem Fernlichtmodul und dem Abbiegelichtmodul angeordnet ist. Zweckmäßigerweise ist das Abbiegelichtmodul zur Fahrzeuginnenseite ausgerichtet. Zur Fahrzeugaußenseite befindet sich hingegen das Fernlichtmodul. Durch die im Wesentlichen symmetrische Anordnung der benachbarten Lichtmodule zum mittig angeordneten Projektionsmodul wird eine ausbalancierte Anordnung des Kraftfahrzeugscheinwerfers erzielt. Die zusätzlich angeordneten Lichtmodule für Fernlicht und für Abbiegelicht verhalten sich als Ausgleichsgewichte, wodurch eine Austarierung des Masseschwerpunktes erreicht wird. In einer alternativen Ausführungsform der Erfindung kann das Abbiegelichtmodul wenige Zentimeter versetzt zum Fernlichtmodul positioniert sein. Derartige Positionierungen aller lichterzeugenden Module können in diverse Raumrichtungen vorgenommen werden, um den Masseschwerpunkt des Tragrahmens sowie der lichterzeugenden Module möglichst mittig innerhalb des fiktiven Dreiecks zu legen. Hierdurch können weitestgehend unerwünschte Kippmomente relativ zur Tragrahmenaufhängung, die während der Fahrt entstehen können, vermieden werden.

Weiterhin kann erfindungsgemäß vorgesehen sein, dass der Tragrahmen mit mindestens einem Ausgleichsgewicht ausgeführt ist, so dass der Masseschwerpunkt mittig innerhalb des Dreieckes liegt. Beispielsweise ist es möglich, dass der Tragrahmen ein Projektionsmodul sowie lediglich ein weiteres benachbartes Lichtmodul aufweist. Bei dieser Anordnung ist die Verwendung eines Ausgleichsgewichtes an der dem Lichtmodul gegenüber liegenden Seite des Tragrahmens vorteilhaft, um den resultierenden Masseschwerpunkt möglichst in der Nähe des schweren Projektionsmoduls beizubehalten. Hierbei können die Ausgleichsgewichte einstückig mit dem Tragrahmen verbunden sein, wobei es von Vorteil ist, das Ausgleichsgewicht an den aus Kunststoff bestehenden Tragrahmen anzuspritzen.

Erfindungsgemäß weist die Tragrahmenaufhängung zwei Lagerpunkte oberhalb des Projektionsmoduls und einen Lagerpunkt unterhalb des Projektionsmoduls auf. Die oberen Lagerpunkte können hierbei translatorisch, parallel zueinander verschiebbar angeordnet sein, wobei die oberen Lagerpunkte manuell bewegt werden können. Es ist auch eine elektromotorische Bewegung dieser Lagerpunkte denkbar, die vorzugsweise zur horizontalen und bei einem Simultanbetrieb zur vertikalen Justage der Lichtverteilung dienen und darüber hinaus die Hauptlast des Tragrahmens sowie der lichterzeugenden Module tragen. Der Tragrahmen ist vorzugsweise im Bereich der Lagerpunkte über Gelenkteile mit dem Gehäuse verbunden. In einer bevorzugten Ausführungsform der Erfindung sind beide oberen Lagerpunkte jeweils über eine Schraubenspindel verstellbar, die an ihrem dem Lagerpunkt abgewandten Ende ein Kegel-Stirnradgetriebe aufweisen kann. Ein außerhalb des Gehäuses angeordnetes Schraubenelement, welches vom Benutzer leicht betätigbar ist, ist mit dem Kegel-Stirnradgetriebe in Wirkverbindung. Durch eine Betätigung der Schraube wird eine Bewegung des Kegel-Stirnradgetriebes erzeugt, welches über die Schraubenspindel eine translatorische Verschiebung des jeweiligen Lagerpunktes bewirkt. In einer bevorzugten Ausführungsform des Kraftfahrzeugscheinwerfers weist das Gehäuse im Bereich der oberen Lagerpunkte Führungsschienen auf, die eine translatorische Bewegung ermöglichen.

In erfindungsgemäßer Ausgestaltung des Kraftfahrzeugscheinwerfers ist der Tragrahmen um eine horizontale und um eine vertikale Schwenkachse verschwenkbar, wobei der untere Lagerpunkt auf der horizontalen Schwenkachse gemeinsam mit einem oberen Lagerpunkt auf der vertikalen Schwenkachse angeordnet ist. Das bedeutet, dass direkt vertikal unter einem oberen Lagerpunkt der untere Lagerpunkt positioniert ist, der beispielsweise über einen Stellmotor zur Leuchtweitenregulierung bewegt werden kann. Vorzugsweise ist der zur Fahrzeuginnenseite abgewandte obere Lagerpunkt in vertikale Richtung oberhalb des unteren Lagerpunktes angeordnet. Wird bei dieser Ausführungsform der Tragrahmenaufhängung nun der der Fahrzeuginnenseite zugewandte obere Lagerpunkt translatorisch, das bedeutet im Wesentlichen in Fahrzeugscheinwerferleuchtrichtung verstellt, erfolgt lediglich eine Verschiebung des Tragrahmens um die vertikale Schwenkachse.

In einer vorteilhaften Ausgestaltung kann eine am Gehäuse befestigte Schutzblende zumindest teilweise das Abbiegelichtmodul abdecken. Die Schutzblende dient unter anderem als Abschirmmittel, wodurch bei Aktivierung des Abbiegelichtmoduls möglichst kein Licht in Fahrtrichtung abgestrahlt wird sondern lediglich der seitliche Außenbereich des Kraftfahrzeuges beleuchtet wird. Hierbei ragt die Schutzblende vorzugsweise zumindest teilweise in die Kammer des Abbiegelichtmoduls hinein, so dass durch diesen verdeckten Einbau des Abbiegelichtmoduls ein Lichtaustritt lediglich nur seitlich aus dem Kraftfahrzeugscheinwerfer erfolgen kann. Das Abbiegelichtmodul kann beispielsweise bei sehr engen Kurven, Serpentinen, Kreuzungen und bei Rangiervorgängen für den Fahrer nützlich sein, bei dem es den direkten Seitenbereich vor seinem Fahrzeug beleuchtet. Vorteilhafterweise wird in diesen Situationen dem Abblendlicht, welches durch das Projektormodul erzeugt wird, das Abbiegelicht (statisches Kurvenlicht) zugeschaltet. In einer möglichen Ausführungsform wird das Abbiegelichtmodul mit Hilfe eines Reflektors und einer H7 oder H8 Lichtquelle realisiert. Zweckmäßigerweise wird das statische Abbiegelicht dem Abblendlicht automatisch und abhängig von der Geschwindigkeit des Kraftfahrzeuges hinzugeschaltet, wenn der Fahrer den Blinker zwecks eines Abbiegevorganges betätigt oder durch eine enge Kurve fährt. Vorteilhafterweise ist ein Steuergerät dem Kraftfahrzeugscheinwerfer zugeschaltet, welches unter anderem die Parameter Geschwindigkeit, Lenkwinkel und Blinksignal auswertet. Der Komfort dieser Lichtfunktion des Abbiegelichtes kann erhöht werden, indem ein Ein- und Ausschalten nicht schlagartig erfolgt, sondern durch ein Auf- und Abdimmen des Abbiegelichtsystems nach speziellen zeitlichen Parametern erfolgt. Hierbei fließt die Fahrzeuggeschwindigkeit mit ein und verhindert das unbeabsichtigte Zuschalten bei höheren Geschwindigkeiten.

Um einen verbesserten Lichtkomfort während der Fahrt zu erreichen, ist das Projektionsmodul um eine vertikale Achse unabhängig vom Tragrahmen schwenkbar. Hierbei weist das Projektionsmodul ein Lichtelement, einen Lichtreflektor und eine Blende auf, wobei ein Verschwenken des Projektionsmoduls durch einen Motor erfolgt. Derartige Projektionsmodule, mit denen ein dynamisches Kurvenlicht erzeugt werden kann, weisen in der Regel eine hohe Gewichtskraft auf, so dass eine Positionierung des Masseschwerpunktes mittig innerhalb des fiktiven Dreiecks gemäß der vorliegenden Erfindung von wesentlichem Vorteil ist. Hierdurch können etwaig große auf die Tragrahmenaufhängung wirkende Drehmomente weitestgehend ausgeschlossen werden. Dem Projektionsmodul ist die vertikale Achse zugeordnet, um die das Projektionsmodul verschwenkt werden kann, wodurch dynamisches Kurvenlicht entsteht. Zweckmäßigerweise ist das Projektionsmodul am Tragrahmen befestigt, wobei der Schwenkwinkel des Projektionsmoduls vorzugsweise im Bereich von ± 15° für Kurvenradien bis etwa 200 m ausgelegt ist. Es hat sich gezeigt, für kleinere Kurvenradien das dynamische Kurvenlicht durch ein zusätzliches oben bereits beschriebenes statisches Kurvenlicht zu unterstützen. Der Schwenkvorgang des Projektionsmoduls erfolgt vorzugsweise durch eine Auswertung technischer Größen, wie zum Beispiel des Lenkwinkels, der Geschwindigkeit oder der Gierrate mit Hilfe eines speziellen Steueralgorithmus, welches durch ein im Kraftfahrzeug eingebautes Steuergerät erfolgt.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine rein schematische Darstellung eines Kraftfahrzeugscheinwerfers mit einem verschwenkbaren Tragrahmen und
- Figur 2: ein Horizontalschnitt auf den in Figur 1 dargestellten Kraftfahrzeugscheinwerfer.

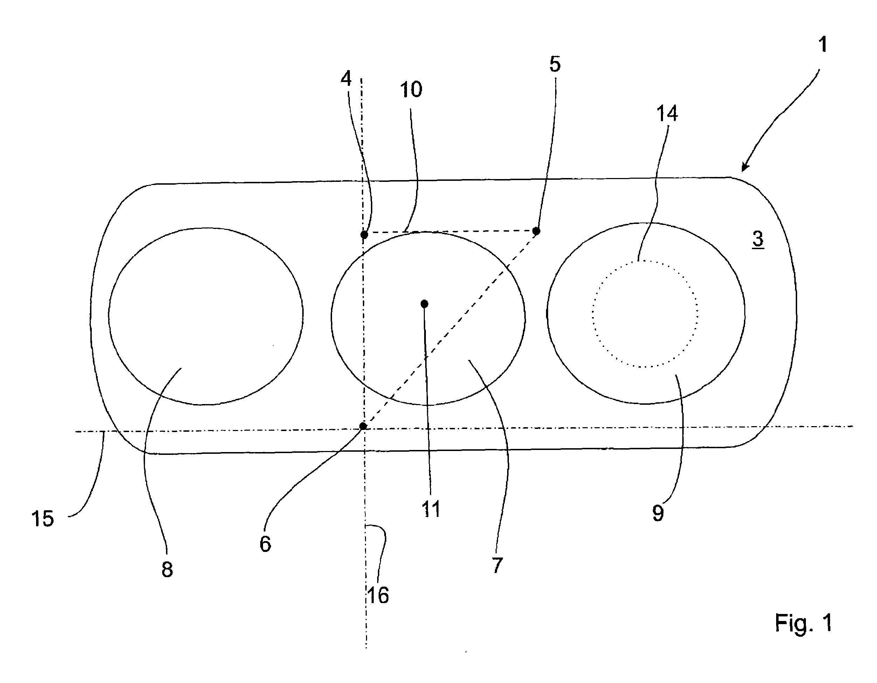

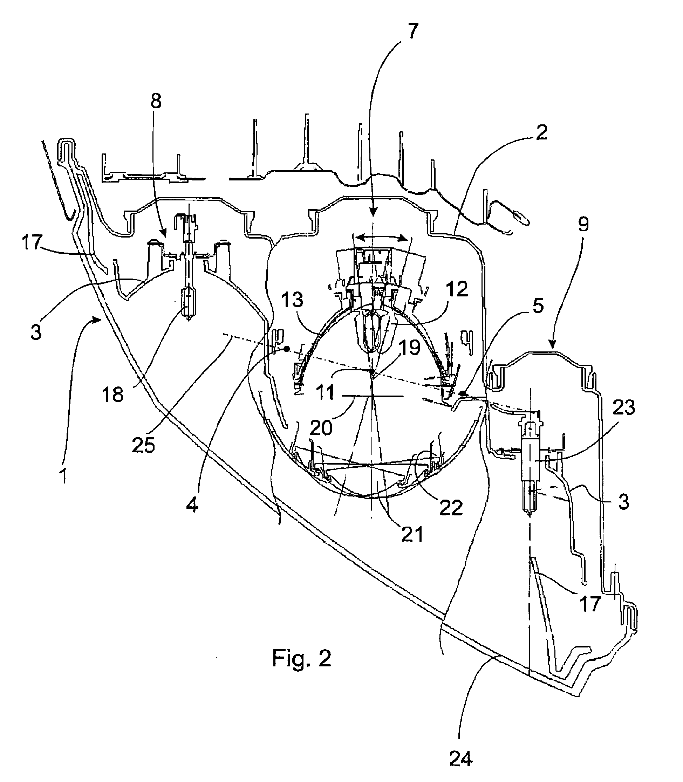

In Figur 1 ist in rein schematischer Darstellung ein Kraftfahrzeugscheinwerfer 1 gezeigt, der drei lichterzeugende Module 7, 8, 9 aufweist. Hierbei weist der Fahrzeugscheinwerfer 1 einen Tragrahmen 3 auf, welcher ein Spritzgussteil aus Kunststoff ist. Der Fahrzeugscheinwerfer 1 stellt hierbei den rechten Fahrzeugscheinwerfer 1 eines Kraftfahrzeuges ausgehend von der Sichtweise eines Fahrzeuginsassen dar. Das mittlere lichterzeugende Modul 7 ist im vorliegenden Ausführungsbeispiel als Projektionsmodul 7 ausgeführt. Dieses Projektionsmodul 7 ist unter anderem für das Abblendlicht sowie für das Fernlicht zuständig. Eine weitere detaillierte Beschreibung des Projektionsmoduls 7 erfolgt gemäß Figur 2. Benachbart, auf der linken Seite des Projektionsmoduls 7 befindet sich ein Fernlichtmodul 8, welches im Tragrahmen 3 integriert ist. Hierbei ist die Reflektionskammer des Fernlichtmoduls 8 mit dem Tragrahmen 3 einstückig verbunden. Benachbart, auf der rechten Seite des Projektionsmoduls 7 ist ein Abbiegelichtmodul 9 angeordnet, welches insbesondere bei Kurvenfahrten eine zusätzliche Ausleuchtung des Seitenbereiches vor dem Fahrzeug für den Fahrer bereitstellt. Auch dieses Abbiegelichtmodul 9 weist eine Reflektionskammer auf, die wie das Fernlichtmodul 8 im Tragrahmen 3 integriert ist. Beide lichterzeugende Module 8, 9 weisen mittig der Reflektorkammer eine Öffnung auf, durch die die jeweilige Lichtquelle 18,23 hindurchragend befestigt ist, welches in Figur 2 beschrieben ist.

Im vorliegenden Ausführungsbeispiel weist der Tragrahmen 3 eine Tragrahmenaufhängung 4, 5, 6 auf, die zwei obere Lagerpunkte 4, 5 und einen unteren Lagerpunkt 6 hat. Diese Lagerpunkte 4, 5, 6 wirken als Einstellpunkte, um beispielsweise den Fahrzeugscheinwerfer 1 unmittelbar nach dem Einbau in das Fahrzeug hinsichtlich des ausfallenden Lichtes einzustellen. Bei diesem Einstellvorgang ist es wichtig, dass das vom Projektionsmodul erzeugte Abblendlicht einen nicht zu hohen Ausstrahlwinkel aufweist, wodurch nachteiligerweise eine Blendung der Fahrzeugteilnehmer entstehen kann. Eine derartige Grundjustierung erfolgt an den Lagerpunkten 4, 5, die manuell mit dem Tragrahmen 3 verschoben werden können. Wie Figur 1 verdeutlicht, ist der Tragrahmen 3 horizontal und vertikal verschwenkbar. Hierbei weist der Tragrahmen 3 eine vertikale Schwenkachse 16 auf, die durch den unteren Lagerpunkt 6 sowie durch den oberen, linken Lagerpunkt 4 verläuft. Eine horizontale Schwenkachse 15 verläuft durch den unteren Lagerpunkt 6, die gleichzeitig einen senkrechten Winkel zur vertikalen Schwenkachse 16 bildet.

Die oberen Lagerpunkte 4, 5 werden im vorliegenden Ausführungsbeispiel durch ein Kegel-Stirnradgetriebe sowie über eine Schraubenspindel bewegt, welche nicht explizit dargestellt sind. Die Bewegung der Lagerpunkte 4, 5 erfolgt senkrecht zur Zeichenebene. Wird beispielsweise der Lagerpunkt 5 aus der Zeichenebene um einen bestimmten Betrag bewegt, verschwenkt sich der Tragrahmen 3 lediglich um die vertikale Schwenkachse 16. Somit kann eine rein horizontale Einstellung des ausfallenden Lichtes bewirkt werden, ohne dass gleichzeitig die Leuchtweite verstellt wird. Werden beispielsweise gleichzeitig die oberen Lagerpunkte 4, 5 mit demselben Betrag in die selbe Richtung verschoben, verschwenkt sich der Tragrahmen 3 um die horizontale Schwenkachse 15. Hierdurch erfolgt eine Leuchtweiteneinstellung.

Im vorliegenden Ausführungsbeispiel ist der Lagerpunkt 6 durch einen Stellmotor im Wesentlichen senkrecht zur Zeichenebene verstellbar. Hierdurch kann eine automatische Leuchtweitenregulierung bewirkt werden, welches bei Projektionsmodulen mit einer Xenon-Lichtquelle von Vorteil ist. Beispielsweise kann über Achssensoren der Beladungszustand ermittelt werden, die mit einem Steuergerät in Kommunikation stehen. Das Steuergerät kann entsprechend den Stellmotor ansprechen, der wiederum eine Bewegung des unteren Lagerpunktes 6 bewirkt, wodurch eine automatische Leuchtweitenkorrektur erfolgt. Selbstverständlich kann zusätzlich über den unteren Lagerpunkt 6 eine dynamische Leuchtweitenregelung durchgeführt werden, bei der Brems- und Beschleunigungsvorgänge ebenfalls schnell ausgeglichen werden können. Im dargestellten Ausführungsbeispiel sind alle Lagerpunkte 4, 5, 6 über Gelenkteile (die nicht explizit dargestellt sind) mit dem Gehäuse 2 verbunden. Um insbesondere aufkommende Querkräfte während der Bewegung der Lagerpunkte 4, 5, 6 möglichst gering zu halten, ist im Bereich des Lagerpunktes 6 ein Doppelgelenk angeordnet.

Einer der besonderen Vorteile dieser erfindungsgemäßen Vorrichtung ist, dass die Lagerpunkte 4, 5, 6 ein fiktives Dreieck 10 bilden, wobei der resultierende Masseschwerpunkt 11 des Tragrahmens sowie der lichterzeugenden Module 7, 8, 9 innerhalb des Dreiecks 10 liegt. Der resultierende Masseschwerpunkt 11 setzt sich im Wesentlichen aus den Einzelmasseschwerpunkten des Tragrahmens 3 sowie des Fernlichtmoduls 8, des Projektionsmoduls 7 sowie des Abbiegelichtmoduls 9 zusammen. Da bei der vorliegenden Erfindung der resultierende Masseschwerpunkt 11 mittig innerhalb des fiktiven Dreiecks 10 liegt, entstehen keine wesentlich großen Kräfte oder Drehmomente, die auf die Tragrahmenaufhängung 4, 5, 6 wirken. Das eine hohe Masse aufweisende Projektionsmodul 7 ist vorteilhafterweise mittig am Tragrahmen 3 angeordnet. Beide seitlich positionierten, lichterzeugenden Module 8, 9 tragen zur Ausbalancierung des resultierenden Masseschwerpunktes 11 bei.

Falls ein Kraftfahrzeugscheinwerfer 1 mit lediglich zwei lichterzeugenden Modulen 7, 8 seine Verwendung finden soll, bietet es sich an, auf der rechten Seite des Projektionsmoduls 7 ein Dummy 14 als Attrappe mit einem Ausgleichsgewicht am Tragrahmen 3 zu versehen, wodurch der resultierende Masseschwerpunkt 11 innerhalb des fiktiven Dreiecks 10 beibehalten werden kann. Natürlich sind an diversen Stellen des Tragrahmens 3 Ausgleichsgewichte 14 einsetzbar, um je nach Typ des lichterzeugenden Moduls 7, 8, 9 eine optimale Austarierung des Masseschwerpunktes 11 zu bewirken. Somit können unerwünschte Kippmomente, die unter anderem durch dynamische Anregungen bedingt sind, weitestgehend vermieden werden.

Gemäß Figur 2 weist das Projektionsmodul 7 ein Lichtelement 12, einen Reflektor 13 sowie eine Blende 20 auf. Das Lichtelement 12 ist im vorliegenden Ausführungsbeispiel eine Xenon-Lichtquelle 12. Wie zu erkennen ist, ist das Projektionsmodul 7 um eine vertikale Achse 19 unabhängig vom Tragrahmen 3 schwenkbar gelagert. Hierdurch kann ein dynamisches Kurvenlicht durch den erfindungsgemäßen Kraftfahrzeugscheinwerfer 1 erzeugt werden. Die Blende 20 ist rein schematisch innerhalb des Projektionsmoduls 7 angedeutet, die über einen weiteren Motor, der nicht dargestellt ist, parallel zur vertikalen Achse 19 verstellt werden kann. Durch eine entsprechende Verstellung 20 kann auch das Projektionsmodul 7 neben dem Abblendlicht ein Fernlicht erzeugen. Vor der Blende 20 ist beabstandet eine Linse 21 angeordnet, die durch einen Linsenhalter 22 zuverlässig gehalten wird.

Am Gehäuse 2 des Fahrzeugscheinwerfers 1 ist eine Schutzblende 17 befestigt, die das Abbiegelichtmodul 9 teilweise abdeckt. Als Lichtquelle für das Abbiegelicht kann beispielsweise eine H7 oder H8 Lichtquelle 23 verwendet werden. Eine durchsichtige Abschlussscheibe 24 aus Kunststoff verschließt den Tragrahmen 3 mit den lichterzeugenden Modulen 7, 8, 9 von der äußeren Umgebung. Die Schutzblende 17 dient zusätzlich als Zierelement.

Die Schutzblende 17 kann in einer möglichen, nicht dargestellten Ausführungsform der Erfindung eine Aufnahme für das Blinkerlicht aufweisen. Die Blinkerlichtquelle kann hierbei durch das Gehäuse 2 aufgenommen sein. Durch eine Integration des Blinkerlichts an der Schutzblende 17 kann eine schnelle, wirtschaftliche Montage des Kraftfahrzeugscheinwerfers 1 erzielt werden.

Wie Figur 2 verdeutlicht, sind die oberen Lagerpunkte 4, 5 zueinander versetzt angeordnet. Der Masseschwerpunkt 11 befindet sich hierbei zwischen dem Lichtelement 12 des Projektionsmoduls 7 und der vertikalen Schwenkachse 19. Vorteilhafterweise verläuft bei dieser Ausführungsform der Erfindung die Verbindung zwischen den oberen Lagerpunkten 4, 5, die auch als virtuelle Befestigungsachse 25 bezeichnet werden kann, durch den Masseschwerpunkt 11. Diese virtuelle Befestigungsachse 25 erstreckt sich des Weiteren durch die beiden benachbarten Reflektorkammern des Fernlichtmoduls 8 sowie des Abbiegelichtmoduls 9, wodurch eine günstige Schwerpunktanordnung des Fahrzeugscheinwerfers 1 erzielt wird.

### Bezugszeichenliste

- **1**: Kraftfahrzeugscheinwerfer
- **2**: Gehäuse
- **3**: Tragrahmen
- **4**: Oberer Lagerpunkt
- **5**: Oberer Lagerpunkt
- **6**: Unterer Lagerpunkt
- **7**: Lichterzeugendes Modul, Projektionsmodul
- **8**: Lichterzeugendes Modul, Fernlichtmodul
- **9**: Lichterzeugendes Modul, Abbiegelichtmodul
- **10**: Fiktives Dreieck
- **11**: Masseschwerpunkt
- **12**: Lichtelement, Xenon-Lichtquelle
- **13**: Reflektor
- **14**: Ausgleichsgewicht, Masse
- **15**: Horizontale Schwenkachse
- **16**: Vertikale Schwenkachse
- **17**: Schutzblende
- **18**: Lichtquelle
- **19**: Vertikale Schwenkachse
- **20**: Blende
- **21**: Linse
- **22**: Linsenhalter
- **23**: Lichtquelle
- **24**: Abschlussscheibe
- **25**: Virtuelle Befestigungsachse

## Patentansprüche

1. Kraftfahrzeugscheinwerfer (1) mit einem Gehäuse (2), an dem ein horizontal und ein vertikal verschwenkbarer Tragrahmen (3) angeordnet ist, der an einer Tragrahmenaufhängung mit drei Lagerpunkten (4,5,6) gelagert ist und wenigstens ein lichterzeugendes Modul (7,8,9) aufnimmt, wobei die Lagerpunkte (4,5,6) ein fiktives Dreleck (10) bilden und wobei das lichterzeugende Modul (7) als ein Projektionsmodul (7) mit einem Lichtelement (12), einem Reflektor (13) und einer Blende (20) ausgeführt ist,
**dadurch gekennzeichnet,**
**dass** der Tragrahmen (3) und das lichterzeugende Modul (7,8,9) einen gemeinsamen resultierenden Masseschwerpunkt (11) aufweisen, der in seiner Lage mittig innerhalb des Dreiecks (10) liegt, wobei die Tragrahmenaufhängung (4,5,6) zwei Lagerpunkte (4,5) oberhalb des Projektionsmoduls (7) und einen Lagerpunkt (6) unterhalb des Projektionsmoduls (7) aufweist und dass der Tragrahmen (3) um eine horizontale (15) und um eine vertikale Schwenkachse (16) verschwenkbar gelagert ist, wobei ein unterer Lagerpunkt (6) auf der horizontalen Schwenkachse (15) gemeinsam mit einem oberen Lagerpunkt (4) auf der vertikalen Schwenkachse (16) angeordnet ist.

2. Kraftfahrzeugscheinwerfer (1) nach Anspruch 1,
**dadurch gekennzeichnet,**
**dass** der Tragrahmen (3) mindestens ein dem Projektionsmodul (7) benachbartes Lichtmodul (8,9) aufweist.

3. Kraftfahrzeugscheinwerfer (1) nach Anspruch 1 oder 2,
**dadurch gekennzeichnet,**
**dass** der Tragrahmen (3) ein Fernlichtmodul (8) und ein Abbiegelichtmodul (9) aufweist, wobei das Projektlonamodul (7) zwischen dem Femlichtmodul (8) und dem Abblegelichtmodul (9) angeordnet ist.

4. Kraftfahrzeugscheinwerfer nach einem der vorhergehenden Ansprüche,
**dadurch gekennzeichnet,**
**dass** der Tragrahmen (3) mit mindestens einem Ausgleichsgewicht (14) ausgeführt ist, so dass der Masseschwerpunkt (11) innerhalb des Dreiecks (10) liegt.

5. Kraftfahrzeugscheinwerfer (1) nach Anspruch 4,
**dadurch gekennzeichnet,**
**dass** das Ausgleichsgewicht (14) einstückig mit dem Tragrahmen (3) verbunden ist.

6. Kraftfahrzeugscheinwerfer (1) nach einem der vorhergehenden Ansprüche,
**dadurch gekennzeichnet,**
**dass** die oberen Lagerpunkte (4,5) translatorisch, parallel zueinander verschiebbar sind.

7. Kraftfahrzeugscheinwerter (1) nach einem der vorhergehenden Ansprüche,
**dadurch gekennzeichnet,**
**dass** eine am Gehäuse (2) befestigte Schutzblende (17) zumindest teilweise das Abbiegelichtmodul (9) abdeckt.

8. Kraftfahrzeugscheinwerfer (1) nach einem, der vorhergehenden Ansprüche,
**dadurch gekennzeichnet,**
**dass** das Projektionsmodul (7) um eine vertikale Achse (19) unabhängig vom Tragrahmen (3) schwenkbar ist.

## Claims

1. A motor vehicle headlamp (1) with a housing (2) in which a horizontally and vertically swiveling carrier frame (3) is arranged, said carrier frame (3) being supported in a carrier frame suspension having three supporting points (4,5,6) and receiving at least one light-generating module (7,8,9), the supporting points (4,5,6) forming a fictitious triangle (10) and the light-generating module (7) being executed as a projection module (7) having a lighting element (12), a reflector (13) and a shutter (20),
**characterized in that** the carrier frame (3) and the light-generating module (7,8,9) have a common, resulting center of gravity (11) being located in the center of the triangle (10), said carrier frame suspension (4,5,6) having two supporting points (4,5) above the projection module (7) and one supporting point (6) below the projection module (7), said carrier frame (3) being supported swiveling around a horizontal (15) and a vertical swiveling axis (16), said bottom support point (6) on the horizontal swiveling axis being arranged together with one top supporting point (4) on the vertical swiveling axis (16).

2. The motor vehicle headlamp (1) following claim 1,
**characterized in that** the carrier frame (3) has at least one light module (8,9) adjacent to the projection module (7).

3. The motor vehicle headlamp (1) following claims 1 or 2,
**characterized in that** the carrier frame (3) has a high beam module (8) and a cornering light module (9), the projection module (7) being arranged between the high beam module (8) and the cornering light module (9).

4. The motor vehicle headlamp (1) as claimed in one of the preceding claims,
**characterized in that** the carrier frame (3) is executed with at least one balancing weight (14), so that the center of gravity (11) lies within the triangle (10).

5. The motor vehicle headlamp (1) according to claim 4,
**characterized in that** the balancing weight (14) and the carrier frame (3) are integrally formed.

6. The motor vehicle headlamp (1) as claimed in one of the preceding claims, **characterized in that** the top supporting points (4,5) are slidable in a translatory fashion and parallel to one another.

7. The motor vehicle headlamp (1) as claimed in one of the preceding claims,
**characterized in that** a protective shield (17) attached to the housing (2) covers the cornering light (9) at least in part.

8. The motor vehicle headlamp (1) as claimed in one of the preceding claims,
**characterized in that** the projection module (7) swivels around a vertical axis (19) independent from the carrier frame (3).

## Revendications

1. Projecteur d'éclairage (1) pour véhicules automobiles, avec un boîtier (2) sur lequel est disposé une armature de support(3) pivotant horizontalement et verticalement, montée sur une suspension à trois points d'appui (4,5,6) et recevant au moins un module de lumière (7,8,9), les trois points d'appui (4,5,6) formant un triangle fictif (10), le module de lumière (7) est réalisé sous forme d'un module de projection (7) avec un élément de lumière (12), un réflecteur (13) et un masque (20),
**caractérisé en ce que** l'armature de support (3) et le module de lumière (7,8,9) comportent un centre de gravité (11) commun qui en résulte et qui se trouve au milieu à l'intérieur du triangle (10), la suspension de l'armature de support (4,5,6) présentant deux points d'appui (4,5) au-dessus du module de projection (7) et un point d'appui (6) au-dessous du module de projection (7) et que l'armature de support (3) est montée de façon pivotante autour d'un axe de pivotement horizontal (15) et vertical (16), présentant un point d'appui (6) inférieur sur l'axe de pivotement horizontal (15) disposé en commun avec un point d'appui supérieur (4) sur l'axe de pivotement vertical (16).

2. Projecteur d'éclairage (1) pour véhicules automobiles selon la revendication 1, **caractérisé en ce que** l'armature de support (3) comporte au moins un module de lumière (8,9) avoisinant au module de projection (7).

3. Projecteur d'éclairage (1) pour véhicules automobiles selon la revendication 1 ou 2, **caractérisé en ce que** l'armature de support (3) comporte un module de feu de route (8) et un module de feu de virage statique (9), le module de projection (7) se trouvant entre le module de feu de route (8) et le module de feu de virage statique (9).

4. Projecteur d'éclairage (1) pour véhicules automobiles selon une des revendications précédentes, **caractérisé en ce que** l'armature de support (3) comporte au moins un contrepoids (14) de sorte que le centre de gravité (11) se trouve à l'intérieur du triangle (10).

5. Projecteur d'éclairage (1) pour véhicules automobiles selon la revendication 4, **caractérisé en ce que** le contrepoids (14) est réalisé en une seule pièce avec l'armature de support (3).

6. Projecteur d'éclairage (1) pour véhicules automobiles selon une des revendications précédentes, **caractérisé en ce que** les points d'appui (4,5) supérieurs peuvent être déplacés de manière translationnelle et en parallèle l'un par rapport à l'autre.

7. Projecteur d'éclairage (1) pour véhicules automobiles selon une des revendications précédentes, **caractérisé en ce que** un masque de protection (17) monté sur le boîtier (2) couvre au moins partiellement le module de feu de virage statique (9).

8. Projecteur d'éclairage (1) pour véhicules automobiles selon une des revendications précédentes, **caractérisé en ce que** le module de projection (7) est pivotable autour d'un axe vertical (19) indépendamment de l'armature de support (3).
